(19) Europäisches Patentamt / European Patent Office / Office européen des brevets

(11) **EP 2 374 181 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **09756318.3**

(22) Anmeldetag: **24.11.2009**

(51) Int Cl.:
**H01M 10/48** *(2006.01)* **H01M 10/0525** *(2010.01)*

(86) Internationale Anmeldenummer:
**PCT/EP2009/065685**

(87) Internationale Veröffentlichungsnummer:
**WO 2010/063607 (10.06.2010 Gazette 2010/23)**

(54) **VERFAHREN ZUR BESTIMMUNG DES LADEZUSTANDS EINER SEKUNDÄREN INTERKALATIONSZELLE EINER WIEDERAUFLADBAREN BATTERIE**

METHOD FOR DETERMINING THE CHARGE STATE OF A SECONDARY INTERCALATION CELL OF A RECHARGEABLE BATTERY

PROCÉDÉ DE DÉTERMINATION DE L'ÉTAT DE CHARGE D'UNE CELLULE INTERCALAIRE SECONDAIRE D'UNE BATTERIE RECHARGEABLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.02.2009 DE 102009000782**
**04.12.2008 DE 102008044353**

(43) Veröffentlichungstag der Anmeldung:
**12.10.2011 Patentblatt 2011/41**

(73) Patentinhaber: **Robert Bosch GmbH**
**70442 Stuttgart (DE)**

(72) Erfinder: **SCHMIDT, Alexander**
**78166 Donaueschingen (DE)**

(56) Entgegenhaltungen:
**EP-A1- 2 124 288**

**Beschreibung**

Stand der Technik

Die Erfindung betrifft ein Verfahren zur Bestimmung des Ladezustands einer sekundären Interkalationszelle einer wiederaufladbaren Batterie, insbesondere für ein Kraftfahrzeug, gemäß dem Oberbegriff des Anspruchs 1.

Sekundäre oder duale elektrochemische Zellen, gängig als Akkumulatoren bezeichnet, unterscheiden sich von primären elektrochemischen Zellen durch ihre Wiederaufladbarkeit.

In vielen technischen Anwendungen ist es wünschenswert und sogar erforderlich, anhand von außerhalb der Zelle messbarer Größen eine Aussage über den Lade- bzw. Entladezustand insbesondere einer sekundären Zelle zu erhalten.

Zur Ladezustandsbestimmung und -vorhersage von sekundären Zellen werden in der Regel modellbasierte Ansätze verwendet. Diese umfassen sogenannte Ersatzschaltbildmodelle, welche das elektrische Verhalten einer Zelle bzw. Batterie mit linear-passiven Elementen, wie etwa mit R-, L-, C-Gliedern approximieren sollen. Generell gilt jedoch, dass der auch als State of Charge (SOC) bezeichnete Ladezustand nicht direkt messbar ist.

Nach dem Stand der Technik wird der SOC typischerweise als Funktion der Ruhespannung, i.e. der Zell- bzw. Batterieruhespannung ermittelt und/oder aus einer Stromintegration und/oder aus einer Kombination, welche verschiedene Zustandsgrößen, wie beispielsweise den letzten ermittelten SOC, die Zell- bzw. Batterietemperatur, die Zell- bzw. Batterieruhespannung, die Stärke des Zell- bzw. Batteriestroms und dergleichen berücksichtigt.

Durch die DE 198 31 723 A1 ist ein Verfahren zur Bestimmung des Ladezustands eines als Fahrzeugstarterbatterie vorgesehenen Akkumulators bei einem Fahrzeug mit einem Starter bekannt. Dabei ist vorgesehen, während des Betriebs des Starters den Spannungsabfall der Batteriespannung zu erfassen und nachfolgend einem Ladezustandswert zuzuordnen.

In der DE 199 13 627 A1 ist ein Verfahren zur Bestimmung des Ladezustands eines Akkumulators beschrieben, das vorsieht, bei einem Akkumulator, der mittels einer variablen Energiequelle geladen wird, indem die von der variablen Energiequelle erzeugte Energie in definierte Strompulse und Pulspausen umgewandelt und in dieser Form dem Akkumulator zugeführt wird, den Ladezustand zu bestimmen, dass der Spannungsverlauf im Akkumulator als Reaktion auf die Strompulse gemessen und ausgewertet wird.

Auch durch die DE 198 31 723 A1 ist ein Verfahren zur Bestimmung des Ladezustands eines als Fahrzeugstarterbatterie vorgesehenen Akkumulators bekannt, welche Fahrzeugstarterbatterie im Rahmen eines Fahrzeugbetriebs ohne Ruhezeiten zum Einsatz kommt. Dabei wird bei Vorliegen eines vorzugsweise den Entlade-Arbeitsbereich der Batterie betreffenden Arbeitsbereichs der Ladezustand auf der Grundlage einer Modellrechnung berechnet, in welcher eine gemessene und eine berechnete Batteriespannung über eine Rückkopplung abgeglichen werden. Die zugrunde liegende Modellrechnung geht von einem durch die Kapazität C der Batterie gegebenen nahezu linearen Zusammenhang zwischen der Ladung Q der Batterie und der Ruhespannung $U_R$ der Batterie aus. Die Dynamik des Säuredichteausgleichs zwischen den Plattenporen und dem freien Säurevolumen der als klassischer Bleiakkumulator ausgeführten Fahrzeugstarterbatterie wird in der Modellrechnung mittels einer Konzentrationsüberspannung $U_K$ über eine in Serie zu der Kapazität C der Batterie angeordnete Kapazität $C_K$ und einen parallel zu der Kapazität $C_K$ liegenden Widerstand $R_K$ nachgebildet. Ferner umfasst die Modellrechnung einen in Serie zu der Kapazität C der Batterie angeordneten Innenwiderstand $R_I$ der Batterie. Zunächst werden eine Batteriespannung $U_{Batt}$ und ein Batteriestrom $I_{Batt}$ gemessen. Der Batteriestrom $I_{Batt}$ wird direkt in die Modellrechnung eingegeben. Die gemessene Batteriespannung $U_{Batt}$ wird mit einer geschätzten Batteriespannung $U_{Batt}'$ abgeglichen und ebenfalls in die Modellrechnung eingegeben, um einen Ruhespannungswert $U_R$ zu berechnen. Zur Schätzung der Ruhespannung $U_R$, der Konzentrationsüberspannung $U_K$ sowie des Innenwiderstands $R_I$ wird ein Beobachter z. B. in Form eines Kalmanfilters eingesetzt. Die Modellrechnung wird im Entlade-Arbeitsbereich durch Rückkopplung des Fehlers zwischen gemessener Batteriespannung $U_{Batt}$ und geschätzter Batteriespannung $U_{Batt}'$ abgeglichen. In den übrigen Arbeitsbereichen wird die Rückkopplung des Fehlers der Modellrechnung unterbrochen und die Ruhespannung aus dem Stromintegral und der zuletzt während des letzten Entlade-Arbeitsbereichs geschätzten Ruhespannung berechnet. Der SOC wird dann gemäß einer Gleichung der Form

$$SOC = f(U_R) = \frac{U_R - U_{R,\min}}{U_{R,\max} - U_{R,\min}}$$

bestimmt, wobei $U_{R,\min}$ und $U_{R,\max}$ die minimale bzw. maximale Ruhespannung bei den vom Batteriehersteller angegebenen Werten der Säuredichte für eine leere bzw. vollgeladene Batterie bezeichnen.

Durch die DE 101 39 049 A1 ist ein weiteres Verfahren zur Bestimmung des Ladezustands einer Fahrzeugbatterie bekannt. Hierzu wird zunächst ein Ladezustandsbestimmungsbetrieb aktiviert, anschließend durch Ansteuerung mindestens einer Elektromaschine des Fahrzeugs ein definierter Laststrom eingestellt und eine Spannungscharakteristik von einer gemessenen Bordnetzspannung abgeleitet. Außerdem wird eine Information über die Batterietemperatur des Fahrzeugs bereitgestellt und schließlich der Ladezustand der Fahrzeugbatterie unter Verwendung der Spannungscharakteristik, der Batterietemperatur und eines abgespeicherten Kennfeldes ermittelt.

Aus der DE 103 01 823 A1 ist ebenfalls ein Verfahren zur Bestimmung des Ladezustands eines Akkumulators bekannt. Um die aus einem Bleiakkumulator bis zu einem vorgegebenen Entladeschluss entnehmbare Ladung zu bestimmen, wird eine Modellrechnung verwendet, welche die elektrischen Eigenschaften des Bleiakkumulators mathematisch darstellt. Mit Hilfe der Modellrechnung wird die bei einem vorgegebenen Entladestrom entnehmbare Ladung berechnet, wobei aus aktuellen Betriebsgrößen Batteriespannung, Batteriestrom und Batterietemperatur des Bleiakkumulators Zustandsgrößen und/oder Parameter für die Modellrechnung ermittelt werden.

Nachteilig an den oben angegebenen Verfahren ist, dass deren simple Struktur zur Bestimmung des SOC mit nur wenigen Parametern durch komplexe Abhängigkeiten der Parameter von SOC, Zelltemperatur und Stromstärke erkauft wird. Folglich gelten die Modellrechnungen nur in einem schmalen Betriebsbereich. Zur Abdeckung aller möglichen Betriebszustände müssten demnach mehrere Modellrechnungen, bzw. parametervariante Modellrechnungen angewandt werden. Dies kann zu einer Instabilität des den Modellrechnungen zugrunde liegenden Algorithmus führen, wenn sich die Parameter stark ändern.

Des Weiteren ist eine messtechnische Verwirklichung der Stromintegration im Allgemeinen stark fehlerbehaftet, was zu starken Abweichungen in der SOC-Vorhersage bzw. Bestimmung führen kann. Ferner wird die Abhängigkeit der Batteriekapazität von der entnommenen Leistung nicht berücksichtigt.

Darüber hinaus handelt es sich bei den Akkumulatoren, bei denen zur Vorhersage der jeweiligen SOC die oben genannten Verfahren vorgesehen und auch weitgehend geeignet sind, um bis heute z. B. als Fahrzeugstarterbatterien verwendete Bleiakkumulatoren. Diese erfüllen zwar Anforderungen, wie sie zur Verwendung insbesondere für kurzzeitige Anwendungen in Kraftfahrzeugen benötigt werden, z. B. hohe Entladeströme, einfacher Aufbau und kostengünstige Herstellung; sie weisen aber erhebliche Nachteile im Hinblick auf ihre Energiedichte auf.

Wesentlich höhere Energiedichten besitzen sogenannte Interkalationszellen, bei denen die elektromotorische Kraft nicht wie z. B. bei Bleiakkumulatoren durch eine chemische Umwandlung des Materials der Elektroden, sondern durch eine Verschiebung von Ionen erzeugt wird.

Allgemein werden bei der Interkalation Moleküle, Ionen oder Atome in Verbindungen eingelagert, ohne dass die Verbindungen ihre Struktur während des Einlagerungsprozesses wesentlich verändern. Insbesondere in der anorganischen Chemie bezeichnet Interkalation die Einlagerung von Atomen, Ionen oder kleinen Molekülen zwischen die Kristallgitterebenen von Schichtkristallen.

Bei einer Interkalationszelle wandern während des Ladevorgangs positiv geladene Ionen von der Kathode durch einen Elektrolyten hindurch zwischen die Kristallgitterebenen der Anode, während der Ladestrom die Elektronen über den äußeren Stromkreis liefert. Die Ionen bilden mit dem Material der Anode so genannte Interkalationskomplexe. Beim Entladen wandern die Ionen durch den Elektrolyten zurück in das Metalloxid der Kathode und die Elektronen können über den äußeren Stromkreis zur Kathode fließen.

Ein für sich gesehen bekanntes Beispiel für eine Interkalationszelle ist ein Lithium-Ionen-Akkumulator sowie dessen Weiterentwicklungen wie z. B. ein Lithium-Polymer-Akkumulator, ein Lithium-Titanat-Akkumulator, eine Super Charge Ion Battery (SCiB), ein Lithium-Mangan-Akkumulator oder ein Lithium-Eisen-Phosphat-Akkumulator.

Bei einer Interkalationszelle gestaltet sich die Bestimmung des Ladezustandes bzw. des SOC wesentlich schwieriger als z. B. bei einem herkömmlichen Bleiakkumulator, da die Interkalation eine räumliche Verteilung ausbildet, die ein zugrunde legbares Simulationsmodell maßgeblich beeinflusst.

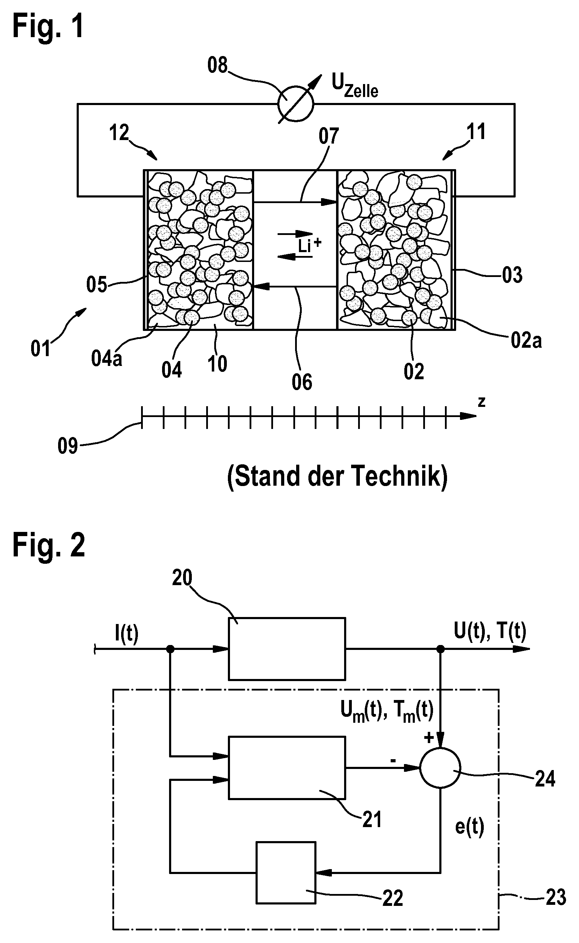

Ein schematischer Aufbau einer bekannten Lithium-Ionen-Interkalationszelle 01 ist in Fig. 1 dargestellt. Die vereinfacht auch als Zelle 01 bezeichnete Lithium-Ionen-Interkalationszelle 01 besteht im Wesentlichen aus einer durch aktive Partikel 02 gebildeten porösen Kathode 11 bzw. positiven Elektrode 11, einer durch aktive Partikel 04 gebildeten porösen Anode 12 bzw. negativen Elektrode 12 und einem zwischen den Elektroden 11, 12 angeordneten Separator 13. Verbleibende Hohlräume zwischen den Partikeln 02, 04 der Elektroden 11, 12 sind mit einem Elektrolyt 10 und Binder-und Füllmaterial 02a,04a gefüllt.

Ein auch für Interkalationszellen verwendbarer alternativer Ansatz zur Bestimmung des SOC ist die Modellierung mittels der zu Grunde liegenden physikalischen und/oder chemischen Effekte in der Zelle. Es wird in diesem Zusammenhang von einem elektrochemischen Simulationsmodell gesprochen.

Durch M. DOYLE, T. FULLER, J. NEWMAN "Modeling of galvanostatic Charge and discharge of the lithium/polymer/insertion cell", Journal of the Electrochemical Society 140 (1993), pp. 1526-1533, und durch T. FULLER, M. DOYLE, J. NEWMAN, "Simulation and optimization of the dual lithium ion insertion cell", Journal of the Electrochemical Society 141 (1994), pp. 1-10 sind elektrochemische Simulationsmodelle bekannt, welche die physikalischen und die chemischen Effekte in einer schematisch in Fig. 1 in ihrem Aufbau dargestellten dualen bzw. sekundären Lithium-Ionen-Interkalationszelle 01 nachbilden. Die vereinfacht auch als Zelle 01 bezeichnete Lithium-Ionen-Interkalationszelle 01 besteht im Wesentlichen aus einer durch aktive Partikel 02 gebildeten porösen Kathode 11 bzw. positiven Elektrode 11, einer durch aktive Partikel 04 gebildeten porösen Anode 12 bzw. negativen Elektrode 12 und einem zwischen den Elektroden 11, 12 angeordneten Separator 13. Verbleibende Hohlräume zwischen den aktiven Partikeln 02, 04 der Elektroden 11, 12 sind mit einem auch als Elektrolytphase bezeichneten Elektrolyt 10 und Binder- und Füllmaterial 02a, 04a gefüllt.

Diese elektrochemischen Simulationsmodelle erlauben die Berechnung bzw. Berücksichtigung der physikalischen und chemischen Effekte:

- Diffusion von Lithium-Ionen Li+ in den Elektroden 11, 12 bzw. zwischen deren Partikeln 02, 04,

- Diffusion von Lithium-Ionen Li+ in der Elektrolytphase,

- Ohmsches Gesetz für das Potenzial in der Elektrolytphase,

- Ohmsches Gesetz für das Potenzial im aktiven Elektrodenmaterial 02, 04 der Elektroden 11, 12,

- Strombilanz in der Elektrolytphase 10, sowie

- Butler-Volmer-Reaktionskinetik für den Ladungsdurchtritt durch die Grenzschicht zwischen den aktiven Partikeln und dem Elektrolyt.

Diese Simulationsmodelle gehören zur der Klasse der sogenannten verteilten Systeme, da sie eine lokale Variation von Zustandsgrößen über den in Fig. 1 durch einen linearen Maßstab 09 schematisch dargestellten Zellquerschnitt berücksichtigen bzw. da die lokale Variation von Zustandsgrößen über den Zellquerschnitt mitberechnet werden. Jede Unterteilung des Maßstabs 09 symbolisiert dabei einen Diskretisierungspunkt für die partiellen Differenzialgleichungen im verteilten System. Dies führt zu einer hohen Modellordnung, verbunden mit einem entsprechenden Rechenaufwand. Im Original Fortran-Code (J. NEWMAN, "Fortran programs for the simulation of electrochemical systems", http://www.cchem.berkeley.edu/_jsngrp/fortran.html (1998)) werden 200 räumliche Diskretisierungspunkte verwendet. Unter Berücksichtigung sechs physikalischer Gleichungen ergeben sich somit 1200 Gleichungen, die für jeden Zeitschritt gelöst werden müssen.

Aus regelungstechnischer Sicht ist bei den Simulationsmodellen der schematisch durch die Pfeile 06 bzw. 07 in Fig. 1 dargestellte eingebrachte oder geforderte Strom die Eingangsgröße und die schematisch durch ein Voltmeter 08 dargestellte Zellspannung die beobachtbare Ausgangsgröße. Die Zellspannung ergibt sich aus dem Potenzial des aktiven Elektrodenmaterials 02 am rechten Rand 03 der Zelle 01 abzüglich des Potenzials des aktiven Elektrodenmaterials 04 am linken Rand 05 der Zelle 01. Der SOC ergibt sich physikalisch aus der diffusionsbasierten Konzentration der Lithium-Ionen Li+ in den aktiven Partikeln der Elektroden 02, 04 bzw. im aktiven Elektrodenmaterial 02, 04 und wird aus der Zellspannung 08 rückgerechnet.

Vorteile dieser verteilte Systeme bildenden elektrochemischen Simulationsmodelle sind eine akkurate Wiedergabe des Zellverhaltens, eine Berücksichtigung einer leistungsabhängigen Kapazität sowie einer physikalischen Berechnung des SOC aus der Lithium-Ionen Konzentration im aktiven Elektrodenmaterial.

Nachteile dieser verteilte Systeme bildenden elektrochemischen Simulationsmodelle sind eine hohe Anzahl an Parametern (über 50 Parameter), ein einer Echtzeitfähigkeit entgegenstehender enorm hoher Rechenaufwand sowie eine unvorteilhafte numerische Konditionierung. Darüber hinaus sind die den verteilten elektrochemischen Simulationsmodelle zugrunde liegenden Vorgänge in praktischen Anwendungen, wo nur Strom, Spannung und Temperatur messbar sind, nicht beobachtbar.

Durch S. SANTHANAGOPALAN, R. E. WHITE "Online estimation of the state of charge of a lithium ion cell", Journal of Power Sources 161 (2006), pp 1346-1355, ist ein auch als Single-Particle-Modell bezeichnetes System bekannt, welches im Gegensatz zu den oben beschriebenen verteilten Systemen die physikalisch-chemischen Eigenschaften über die Elektroden mittelt und die Einflüsse der Prozesse in der Elektrolytphase und im Separator vernachlässigt. Die Mittelung über die Elektroden erfolgt dadurch, dass die im verteilten System in einer Vielzahl räumlicher Diskretisierungspunkte betrachteten physikalisch-chemischen Eigenschaften über jeweils die Anode und die Kathode hinweg gemittelt werden. Die Einflüsse der Prozesse in der Elektrolytphase und im Separator werden dadurch vernachlässigt, indem der Einfluss der Lithium-Ionen in der Elektrolytphase vernachlässigt wird.

Genauer wird beim Single-Particle-Modell jede poröse Elektrode vereinfacht als ein einziges in die Elektrolytphase getauchtes kugelförmiges Partikel betrachtet, dessen Oberfläche auf die Oberfläche der jeweiligen porösen Elektrode skaliert wird. Darüber hinaus werden beim Single-Particle-Modell Konzentrations- und Potenzialänderungen in der Elektrolytphase nicht beachtet. Außerdem werden alle Parameter konstant gehalten und thermische Einflüsse vernachlässigt. Die Lithium-Konzentration in der Anode und in der Kathode wird anhand der Lithium-Konzentration an der Oberfläche des jeweiligen kugelförmigen Partikels und der durchschnittlichen Konzentration innerhalb des kugelförmigen Partikels bestimmt. Die Butler-Volmer-Reaktionskinetik wird jeweils für die Oberflächen der die Anode und die Kathode bildenden kugelförmigen Partikel angewandt.

Ausgehend von einem verteilten System reduziert sich ein dadurch gebildetes Simulationsmodell damit im Wesentlichen auf die elektrochemischen Effekte:

- Butler-Volmer-Reaktionskinetik für den Ladungsdurchtritt durch die Grenzschicht zwischen den beiden die Elektroden bildenden kugelförmigen Partikeln und der sie umgebenden Elektrolytphase sowie

- Diffusion von Lithium-Ionen in den durch jeweils ein kugelförmiges Partikel gebildeten bzw. als solche angenommenen Elektroden.

Der SOC ergibt sich hierbei physikalisch aus der Konzentration der Lithium-Ionen in den beiden als homogen betrachteten, auch als Elektrodenpartikel bezeichenbaren Elektroden.

Beim Single-Particle-Modell handelt es sich um ein so genanntes Lumped Parameter System, dessen Kerneigenschaft es ist, örtlich verteilte Systemzustände zu mitteln. Sich hieraus ergebende Vorteile sind, dass dadurch die räumliche Diskretisierung entfällt und nur noch acht Gleichungen pro Zeitschritt zu lösen bleiben, wodurch das Single-Particle-Modell echtzeitfähig ist, d.h. prinzipiell zur Vorhersage des SOC einer sich in Betrieb bzw. Benutzung befindlichen Interkalationszelle geeignet ist.

Ein Nachteil des Single-Particle-Modells ist, dass die Ausgangsspannung nur bis zu einem Lade- bzw. Entladestrom von bis zu ± 3 C mit den, verteilte Systeme bildenden Simulationsmodellen übereinstimmt. Bei höheren Strömen weicht das Single-Particle-Modell deutlich mehr als 10mV ab. Damit ist ein erheblicher Fehler des SOC von über 5 % verbunden.

Offenbarung der Erfindung

Die Erfindung geht von einem eingangs beschriebenen Verfahren zur Bestimmung des Ladezustands bzw. SOC einer sekundären Interkalationszelle einer wiederaufladbaren Batterie mit einer Anode, einer Kathode, einem Separator und einer die Anode, die Kathode und den Separator durchtränkenden Elektrolytphase aus, wobei der Ladezustand anhand von an der Interkalationszelle gemessener Messgrößen mittels eines elektrochemischen Simulationsmodells rückgerechnet wird, bei welchem Simulationsmodell physikalisch-chemische Eigenschaften, wie z. B. eine Konzentration der bei der Interkalation eingelagerten Atome und/oder Moleküle und/oder Ionen, in der Anode und der Kathode vereinfacht als jeweils homogen in der Anode und in der Kathode verteilt betrachtet werden, und bei welchem Simulationsmodell jeweils eine Butler-Volmer-Reaktionskinetik für die Anode und für die Kathode berechnet wird. Erfindungsgemäß ist dabei vorgesehen, dass die Butler-Volmer-Reaktionskinetik anodenseitig um einen Potenzialanteil in der Elektrolytphase der Anode erweitert wird.

Vorteile der Erfindung gegenüber dem Stand der Technik ergeben sich unter anderem dadurch, dass eine hohe Genauigkeit, wie bei einem verteilten System bei gleichzeitig einfachem und dadurch echtzeitfähigem Algorithmus mit nur wenigen Parametern wie bei einem Lumped-Parameter System erreicht wird.

Zur anodenseitigen Erweiterung der Butler-Volmer-Reaktionskinetik um einen Potenzialanteil in der Elektrolytphase der Anode wird vorzugsweise der Potenzialanteil in der Elektrolytphase der Anode abgeschätzt, indem die Konzentration von der bei der Interkalation in der Anode eingelagerten Atome und/oder Moleküle und/oder Ionen auf die Elektrolytphase übertragen und damit der Potenzialanteil näherungsweise berechnet wird.

Weitere vorteilhafte Ausführungsformen der vorliegenden Erfindung sind Gegenstand der Unteransprüche.

Gemäß einer alternativen Ausgestaltung der Erfindung wird zur anodenseitigen Erweiterung der Butler-Volmer-Reaktionskinetik der Potenzialanteil in der

Elektrolytphase der Anode vorzugsweise anhand des Lade- bzw. Entladestroms der Zelle, der mittleren Leitfähigkeit der Elektrolytphase und der Dicke eines durch die Lagen der Anode, des Separators und der Kathode gebildeten Anoden-Separator-Kathoden-Sandwichs abgeschätzt.

Die Erfindung ermöglicht so eine modellbasierte Vorhersage des Ladezustandes einer sekundären Interkalationszelle für alle Betriebspunkte innerhalb der Spezifikation von Zelltemperatur, Zellspannung und Lade- bzw. Entladestrom der Zelle durch Messung von Lastrom und Klemmenspannung der Zelle.

Das Überpotenzial $\eta_{s,a}$ der um den Potenzialanteil in der Elektrolytphase der Anode erweiterten Butler-Volmer-Reaktionskinetik der Anode wird vorzugsweise gemäß

$$\eta_{s,a} = \Phi_{s,a} - U_a(c_{s,a}) - \Phi_2(k,I,L) - \Phi_{SEI}$$

berechnet, mit dem Spannungsabfall $\phi_{s,a}$ in der festen Phase bei einem Lade- bzw. Entladestrom I der Zelle, der Ruhespannung $U_a(c_{s,a})$ der Anode in Abhängigkeit von der Konzentration $c_{s,a}$ von in den aktiven Partikeln der Anode bei der Interkalation eingelagerten Atome und/oder Moleküle und/oder Ionen, dem Potenzialabfall ($\phi_{SEI}$, durch den Filmwiderstand an der Oberfläche der Anode und dem einem Spannungsabfall entsprechenden Potenzialanteil ($\phi_2(k,I,L)$ in der Elektrolytphase der Anode in Abhängigkeit von der mittleren Leitfähigkeit k der Elektrolytphase, dem Lade- bzw. Entladestrom I der Zelle sowie der Dicke L des Anoden-Separator-Kathoden-Sandwichs.

Eine vorteilhafte Ausgestaltung des erfindungsgemäßen Verfahrens sieht vor, dass der Potenzialanteil $\phi_2(k,I,L)$ in der Elektrolytphase der Anode gemäß

$$\Phi_2 = k^{-1} \cdot L \cdot I(t)$$

berechnet wird, mit der mittleren Leitfähigkeit k der Elektrolytphase, der Dicke L des Anoden-Separator-Kathoden-Sandwichs und dem Lade- bzw. Entladestrom der Zelle I(t) in Abhängigkeit von der Zeit t, wobei die mittlere Leitfähigkeit k der Elektrolytphase anhand des Lade- bzw. Entladestroms der Zelle I(t) abgeschätzt wird.

Alternativ zu der zuvor beschriebenen bevorzugten Ausführungsvariante ist denkbar, dass der Potenzialanteil $\phi_2(k,I,L)$ in der Elektrolytphase der Anode gemäß

$$\Phi_2 = k^{-1} \cdot L \cdot I(t)$$

berechnet wird, mit der mittleren Leitfähigkeit k der Elektrolytphase, der Dicke L des Anoden-Separator-Kathoden-Sandwichs und dem Lade- bzw. Entladestrom der Zelle I(t) in Abhängigkeit von der Zeit t, wobei die mittlere Leitfähigkeit k der Elektrolytphase anhand eines Mittelwerts des Lade- bzw. Entladestroms der Zelle I(t) abgeschätzt wird.

Vorzugsweise wird die mittlere Leitfähigkeit k der Elektrolytphase mit einer empirischen Gewichtung w gewichtet. Die mittlere Leitfähigkeit der Elektrolytphase ergibt so zusammen mit der empirischen Gewichtung w einen Lumping Parameter.

Der Ladezustand wird mittels des Simulationsmodells vorzugsweise anhand der Messgrößen Zelltemperatur, Zellspannung und Lade- bzw. Entladestrom der Zelle rückgerechnet.

Eine besonders vorteilhafte Ausgestaltung der Erfindung sieht vor, dass die Anode und die Kathode bei der Berechnung der Butler-Volmer-Reaktionskinetik für die Anode und für die Kathode jeweils vereinfacht als ein kugelförmiges Partikel mit einer der Oberfläche der Anode bzw. der Kathode einer realen sekundären Interkalationszelle entsprechenden Kugeloberfläche betrachtet werden, innerhalb denen jeweils die physikalisch-chemischen Eigenschaften als homogen verteilt betrachtet werden.

Die physikalisch-chemischen Eigenschaften in der Anode und in der Kathode werden dabei vorzugsweise anhand der jeweils zuletzt berechneten physikalisch-chemischen Eigenschaften in der Anode und in der Kathode und anhand der physikalisch-chemischen Eigenschaften an der Oberfläche der Anode und der Kathode berechnet.

Eine andere besonders vorteilhafte Ausgestaltung der Erfindung sieht vor, dass die jeweils in der Anode und in der Kathode als homogen verteilt betrachteten physikalisch-chemischen Eigenschaften zumindest die Konzentration der bei der Interkalation eingelagerten Atome und/oder Moleküle und/oder Ionen jeweils in der Anode und in der Kathode umfassen.

Besonders bevorzugt handelt es sich bei der sekundären Interkalationszelle um eine Lithium-Ionen-Interkalationszelle.

Ausführungsbeispiele der Erfindung werden anhand der Zeichnungen erläutert. Es zeigen:

Fig. 1: einen schematischen Aufbau einer sekundären bzw. dualen Interkalationszelle.

Fig. 2: eine schematische Darstellung einer Anwendung des erfindungsgemäßen Verfahrens.

Fig. 3: ein schematische Darstellung eines dem erfindungsgemäßen Verfahren zugrunde liegenden elektrochemischen Simulationsmodells.

Ausführungsformen der Erfindung

Ein Verfahren zur Bestimmung des Ladezustands bzw. SOC einer vorzugsweise als Lithium-Ionen-Akkumulator ausgeführten sekundären Interkalationszelle 20 wird vorzugsweise, wie in Fig. 2 schematisch dargestellt, eingesetzt, indem der SOC der Interkalationszelle 20 anhand von an der Interkalationszelle 20 zum Zeitpunkt t gemessener Messgrößen Zelltemperatur T(t), Zellspannung U(t) und Lade- bzw. Entladestrom der Zelle I(t), mittels eines elektrochemischen Simulationsmodells 21 rückgerechnet wird. Dabei dient vorzugsweise der gemessene Lade- bzw. Entladestrom der Zelle I(t) als Eingangsgröße des Simulationsmodells 21, wobei die Ausgangsgrößen Zelltemperatur $T_m(t)$ und Zellspannung $U_m(t)$ des Simulationsmodells mit den Messgrößen Zelltemperatur T(t) und Zellspannung U(t) der Interkalationszelle 20 verglichen werden.

Eine Rückführverstärkung 22 eines sich aus dem Vergleich ergebenden Beobachtungsfehlers e(t) kann nach Luenberger oder Kalman bestimmt werden. Der SOC wird dabei aus den Messgrößen und Lade- bzw. Entladestrom der Zelle I(t), Zelltemperatur T(t) und Zellspannung U(t) rekonstruiert. Ein Start-SOC kann durch einen Zustandsbeobachter 23, wie z. B. ein Kalmanfilter, ermittelt werden.

Um in einem in Fig. 2 dargestellten Anwendungsfall vorzugsweise zeitgleich bzw. zeitnah zum Zeitpunkt t eine Vorhersage des SOC zu erhalten, muss dem Simulationsmodell 21 ein Algorithmus zugrunde liegen, welcher ohne rechenintensive Parameterkennfelder auskommt.

Beispielsweise für eine Fahrzeuganwendung, z. B. in einem mit einer sekundären Interkalationszelle ausgestatteten Kraftfahrzeug, z. B. einem Elektro- oder Hybridfahrzeug, muss ein für ein Verfahren zur Bestimmung des SOC der sekundären Interkalationszelle vorgesehenes und durch einen solchen Algorithmus gebildetes Simulationsmodell die leistungs- und temperaturabhängige Kapazität der Interkalationszelle abbilden, eine mit einem verteilten System, beispielsweise mit einem aus M. DOYLE, T. FULLER, J. NEWMAN "Modeling of galvanostatic charge and discharge of the lithium/polymer/insertion cell", Journal of the Electrochemical Society 140 (1993), pp. 1526-1533, und aus T. FULLER, M. DOYLE, J. NEWMAN, "Simulation and optimization of the dual lithium ion insertion cell", Journal of the Electrochemical Society 141 (1994), pp. 1-10 bekannten, ein verteiltes System bildenden Simulationsmodell vergleichbare Güte besitzen, im regelungstechnischen Sinn beobachtbar sein, und es darf höchstens etwa jeweils zehn Parameter und Systemzustände umfassen, um echtzeitfähig zu sein.

Dies wird durch ein erfindungsgemäßes Verfahren zur Bestimmung des SOC einer sekundären Interkalationszelle mit einer Anode, einer Kathode, einem Separator und einer die Anode, die Kathode und den Separator durchtränkenden Elektrolytphase sichergestellt, bei dem der Ladezustand anhand von an der Interkalationszelle gemessener Messgrößen mittels eines elektrochemischen Simulationsmodells 21 rückgerechnet wird, bei welchem Simulationsmodell 21 physikalisch-chemische Eigenschaften, wie z. B. eine diffusionsbasierte Konzentration der bei der Interkalation eingelagerten Atome und/oder Moleküle und/oder Ionen in der Anode und in der Kathode vereinfacht als jeweils homogen in der Anode und in der Kathode verteilt betrachtet werden, und bei welchem Simulationsmodell 21 jeweils eine Butler-Volmer-Reaktionskinetik für die Anode und für die Kathode berechnet wird. Die Maßnahme einer homogen verteilten Betrachtung stellt sicher, dass das Simulationsmodell 21 nur wenige Parameter umfasst, so dass der zugrunde liegende Algorithmus echtzeitfähig ist. Um die Genauigkeit eines verteilten Systems zu erhalten ohne dessen Nachteile wie z. B. mangelnden Echtzeitfähigkeit in Kauf nehmen zu müssen, ist darüber hinaus vorgesehen, die Butler-Volmer-Reaktionskinetik anodenseitig um einen Potenzialanteil in der Elektrolytphase der Anode zu erweitern.

Vorzugsweise basiert das dem erfindungsgemäßen Verfahren zugrunde liegende Simulationsmodell 21 auf dem aus S. SANTHANAGOPALAN, R. E. WHITE "Online estimation of the state of charge of a lithium ion cell", Journal of Power Sources 161 (2006), pp 1346-1355 bekannten, echtzeitfähigen Single-Particle-Modell, bei dem die Butler-Volmer-Reaktionskinetik erfindungsgemäß anodenseitig um einen Potenzialanteil in der Elektrolytphase der Anode erweitert ist.

Diese Erweiterung kann vorzugsweise durch eine Abschätzung des Potenzialanteils $\phi_2$ in der Elektrolytphase der Anode auf Basis des Lade- bzw. Entladestroms der Zelle I, der mittleren Leitfähigkeit k der Elektrolytphase und der Dicke L des Anoden-Separator-Kathoden-Sandwichs erfolgen.

Damit wird abweichend zu S. SANTHANAGOPALAN, R. E. WHITE "Online estimation of the state of charge of a lithium ion cell", Journal of Power Sources 161 (2006), pp 1346-1355 sowohl bei Lade-, als auch bei Entladeströmen >3C die Genauigkeit z.B. der aus M. DOYLE, T. FULLER, J. NEWMAN "Modeling of galvanostatic charge and discharge of the lithium/polymer/insertion cell", Journal of the Electrochemical Society 140 (1993), pp. 1526-1533, und aus T. FULLER, M. DOYLE, J. NEWMAN, "Simulation and optimization of the dual lithium ion insertion cell", Journal of the Electrochemical Society 141 (1994), pp. 1-10 bekannten verteilten Systeme erreicht. Rechenzeit und Anzahl Parameter bleiben dagegen auf dem Niveau eines Lumped-Parameter-Systems, wie z.B. dem Single-Particle-Modell.

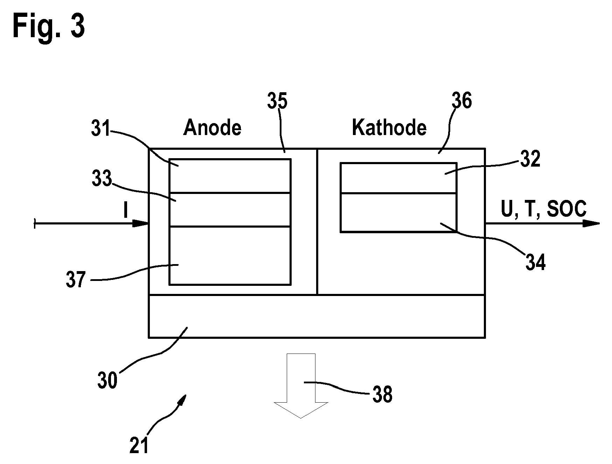

Ein elektrochemisches Simulationsmodell 21 ist in Fig. 3 in seinen wesentlichen Komponenten dargestellt. Es umfasst eine Butler-Volmer-Reaktionskinetik 31 für die Anode 35, eine Butler-Volmer-Reaktionskinetik 32 für die Kathode 36, eine vereinfachte, als homogen in der Anode 35 verteilt betrachtete Berechnung 33 der Konzentration der bei der Interkalation eingelagerten Atome und/oder Moleküle und/oder Ionen in der Anode 35 und eine vereinfachte, als homogen in der Kathode 36 verteilt betrachtete Berechnung 34 der Konzentration der bei der Interkalation eingelagerten Atome und/oder Moleküle und/oder Ionen in der Kathode 36. Ferner kann ein durch Konvektion und/oder Strahlung an die Umgebung abgegebener Wärmestrom 30 aus der ohmschen Leistung berücksichtigt werden. Die Butler-Volmer-Reaktionskinetik 31 ist anodenseitig um eine Abschätzung 37 des Potenzialanteils in der Elektrolytphase der Anode 35 erweitert. Der Lade- bzw. Entladestrom I bildet die Eingangsgröße, die Zellspannung U und die Zelltemperatur T sowie der SOC bilden die Ausgangsgrößen des Simulationsmodells 21.

Die anodenseitige Erweiterung der Butler-Volmer-Reaktionskinetik um einen Potenzialanteil $\phi_2$ in der Elektrolytphase der Anode erfolgt vorzugsweise derart, dass sich das Überpotenzial $\eta_{s,a}$ in der Butler-Volmer-Reaktionskinetik der Anode bzw. der negativen Elektrode zu

$$\eta_{s,a} = \Phi_{s,a} - U_a(c_{s,a}) - \Phi_2(k,l,L) - \Phi_{SEI}$$

ergibt, mit dem Spannungsabfall $\phi_{s,a}$ in der festen Phase, d.h. in den aktiven Partikeln der Anode bei einem Lade- bzw. Entladestrom I der Zelle, der Ruhespannung $U_a(c_{s,a})$ der Anode in Abhängigkeit von der Konzentration $c_{s,a}$ von in den aktiven Partikeln der Anode bei der Interkalation eingelagerten Atome und/oder Moleküle und/oder Ionen, dem Potenzialabfall $\phi_{SEI}$ durch den Filmwiderstand an der Oberfläche der Anode und dem einem Spannungsabfall entsprechenden Potenzialanteil $\phi_2(K,l,L)$ in der Elektrolytphase der Anode in Abhängigkeit von der mittleren Leitfähigkeit k der Elektrolytphase, dem Lade- bzw. Entladestrom I der Zelle, sowie der Dicke L des Anoden-Separator-Kathoden-Sandwichs.

Dabei wird durch die Erfindung der nahezu stationärere Wert am linken Rand der Anode nach einem Stromsprung abgeschätzt. Dies ist möglich, da der Potenzialanteil $\phi_2$ am rechten Rand der Kathode gleich Null ist, wodurch die Reaktionskinetik in der Kathode nicht durch den Potenzialanteil $\phi_2$ beeinflusst wird.

Der Potenzialanteil $\phi_2(k,l,L)$ in der Elektrolytphase der Anode kann gemäß

$$\Phi_2 = w \cdot k^{-1} \cdot L \cdot I(t)$$

berechnet werden, mit der mittleren Leitfähigkeit k der Elektrolytphase, der Dicke L des Anoden-Separator-Kathoden-Sandwichs und dem Lade- bzw. Entladestrom der Zelle I(t) in Abhängigkeit von der Zeit t, wobei die mittlere Leitfähigkeit k der Elektrolytphase anhand des Lade- bzw. Entladestroms der Zelle I(t) abgeschätzt wird und vorzugsweise mit einer empirischen Gewichtung w gewichtet wird. Die mittlere Leitfähigkeit der Elektrolytphase ergibt so zusammen mit der empirischen Gewichtung w einen Lumping Parameter.

Besonders bevorzugt wird die Gewichtung w mit $w = 0.7$ gewählt, dass sich der Potenzialanteil $\phi_2(k,I,L)$ in der Elektrolytphase der Anode zu

$$\Phi_2 = 0.7 \cdot k^{-1} \cdot L \cdot I(t)$$

ergibt.

Die mittlere Leitfähigkeit k der Elektrolytphase kann dem Parametersatz eines verteilten Modells entnommen werden. Die Konzentration $c_{s,a}$ von in den aktiven Partikeln der Anode bei der Interkalation eingelagerten Atome und/oder Moleküle und/oder Ionen kann z.B. über ein aus V. SUBRAMANIAN, V. DIWAKAR, D. TAPRIYAL "Efficient macro-micro scale coupled modeling of batteries", Journal of The Electrochemical Society 152 (2005), A2002-A2008 bekanntes Polynom vierter Ordnung berechnet werden.

Der Term wird jeweils im Anodenteil der Butler-Volmer-Reaktionskinetik eingespeist und ersetzt die ansonsten für eine Bestimmung des Potenzialanteils $\phi_2(k,I,L)$ in der Elektrolytphase der Anode in einem verteilten System erforderliche numerische Lösung zweier partieller Differenzialgleichungen, einer Differenzialgleichung für die Diffusion der bei der Interkalation in der Anode eingelagerten Atome und/oder Moleküle und/oder Ionen, und einer Differenzialgleichung für das Potenzial im Elektrolyt.

Wichtig ist hervorzuheben, dass die Butler-Volmer-Reaktionskinetik ebenso kathodenseitig um einen Potenzialanteil in der Elektrolytphase der Kathode erweitert werden kann. Jedoch ist der Einfluss des Potenzialanteils in der Elektrolytphase der Anode auf die Vorhersage des SOC wesentlich höher, als der Einfluss des Potenzialanteils in der Elektrolytphase der Kathode, weshalb letzterer zur Vereinfachung des Algorithmus vorzugsweise unberücksichtigt bleibt.

Ebenso wichtig ist hervorzuheben, das die der Erfindung zugrunde liegende Idee auch auf andere Zellchemien vergleichbarer innerer Struktur erweitert werden kann.

**Patentansprüche**

1. Verfahren zur Bestimmung des Ladezustands einer sekundären Interkalationszelle mit einer Anode, einer Kathode, einem Separator und einer die Anode, die Kathode und den Separator durchtränkenden Elektrolytphase,
   wobei der Ladezustand anhand von an der Interkalationszelle gemessener Messgrößen mittels eines elektrochemischen Simulationsmodells rückgerechnet wird,
   bei welchem Simulationsmodell physikalisch-chemische Eigenschaften in der Anode und der Kathode vereinfacht als jeweils homogen in der Anode und in der Kathode verteilt betrachtet werden,
   und bei welchem Simulationsmodell jeweils eine Butler-Volmer-Reaktionskinetik für die Anode und für die Kathode berechnet wird, wobei die Butler-Volmer-Reaktionskinetik anodenseitig um einen Potenzialanteil ($\phi_2$) in der Elektrolytphase der Anode erweitert wird **dadurch gekennzeichnet,**
   **dass** ein Überpotenzial $\eta_{s,a}$ der um den Potenzialanteil ($\phi_2$) in der Elektrolytphase der Anode erweiterten Butler-Volmer-Reaktionskinetik der Anode gemäß $\eta_{s,a} = \phi_{s,a} - U_a(c_{s,a}) - (D_2(k,I,L) - \phi_{SEI}$ berechnet wird,
   mit dem Spannungsabfall $\phi_{s,a}$ in der festen Phase bei einem Lade- bzw. Entladestrom I der Zelle,
   der Ruhespannung $U_a(c_{s,a})$ der Anode in Abhängigkeit von der Konzentration $c_{s,a}$ von in der Anode bei der Interkalation eingelagerten Atome und/oder Moleküle und/oder Ionen,
   dem berechneten Potenzialanteil $\phi_2(k,I,L)$ in der Elektrolytphase der Anode gemäß $\phi_2 = w \cdot k^{-1} \cdot L \cdot I(t)$, in der Elektrolytphase der Anode in Abhängigkeit von der mittleren Leitfähigkeit k der Elektrolytphase, dem Lade- bzw. Entladestrom I(t) der Zelle in Abhängigkeit von der Zeit t, einer Gewichtung w, sowie der Dicke L des Anoden-Separator-Kathoden-Sandwichs und dem Potenzialabfall $\phi_{SEI}$ durch den Filmwiderstand an der Oberfläche der Anode.

2. Verfahren nach Anspruch 1, **dadurch gekennzeichnet,**
   **dass** die mittlere Leitfähigkeit k der Elektrolytphase anhand des Lade- bzw. Entladestroms der Zelle I(t) und der Klemmenspannung abgeschätzt wird.

3. Verfahren nach Anspruch 1, **dadurch gekennzeichnet,**
   **dass** die mittlere Leitfähigkeit k der Elektrolytphase anhand eines Mittelwerts des Lade- bzw. Entladestroms der Zelle I(t) abgeschätzt wird.

4. Verfahren nach einem der vorhergehenden Ansprüche, **dadurch gekennzeichnet,**
   **dass** die Messgrößen eine Zelltemperatur, eine Zellspannung und einen Lade- bzw. Entladestrom der Zelle umfassen.

**5.** Verfahren nach einem der vorhergehenden Ansprüche, **dadurch gekennzeichnet, dass** die Anode und die Kathode bei der Berechnung der Butler-Volmer-Reaktionskinetik jeweils vereinfacht als ein kugelförmiges Partikel dessen Oberfläche auf die Oberfläche der Anode bzw. der Kathode einer realen sekundären Interkalationszelle skaliert wird, innerhalb denen jeweils die physikalisch-chemischen Eigenschaften als homogen verteilt betrachtet werden.

**6.** Verfahren nach Anspruch 5, **dadurch gekennzeichnet, dass** die physikalisch-chemischen Eigenschaften in der Anode und in der Kathode anhand der jeweils zuletzt berechneten physikalisch-chemischen Eigenschaften in der Anode und in der Kathode und anhand der physikalisch-chemischen Eigenschaften an der Oberfläche des Aktivmaterials 02, 04 (Fig. 01) der Anode und der Kathode berechnet werden.

**7.** Verfahren nach einem der vorhergehenden Ansprüche, **dadurch gekennzeichnet, dass** die jeweils in der Anode und in der Kathode als homogen verteilt betrachteten physikalisch-chemischen Eigenschaften zumindest die Konzentration der bei der Interkalation eingelagerten Atome und/oder Moleküle und/oder Ionen jeweils in der Anode und in der Kathode umfassen.

**8.** Verfahren nach einem der vorhergehenden Ansprüche, **dadurch gekennzeichnet, dass** es sich bei der sekundären Interkalationszelle um eine Lithium-Ionen-Interkalationszelle handelt.

**Claims**

**1.** Method for determining the charge state of a secondary intercalation cell having an anode, a cathode, a separator and an electrolyte phase which saturates the anode, the cathode and the separator, wherein the charge state is back-calculated by means of an electrochemical simulation model on the basis of measured variables measured on the intercalation cell,
in which simulation model physical-chemical properties in the anode and the cathode are considered in a simplified form as respectively homogeneously distributed in the anode and in the cathode,
and in which simulation model Butler-Volmer redaction kinetics are calculated respectively for the anode and for the cathode,
wherein the Butler-Volmer reaction kinetics are extended on the anode side by a potential component ($\Phi_2$) in the electrolyte phase of the anode, **characterized in that** an overpotential $\eta_{s,a}$ of the Butler-Volmer reaction kinetics extended by the potential component ($\Phi_2$) in the electrolyte phase of the anode is calculated according to $\eta_{s,a} = \Phi_{s,a} - U_a(c_{s,a}) - \Phi_2(k,I,L) - \Phi_{SEI}$,
with the voltage drop $\Phi_{s,a}$ in the solid phase at a charge or discharge current I of the cell,
the open-circuit voltage $U_a(c_{s,a})$ of the anode in dependence on the concentration $c_{s,a}$ of atoms and/or molecules and/or ions intercalated in the anode during the intercalation,
the calculated potential component $\Phi_2(k,I,L)$ in the electrolyte phase of the anode according to $\Phi_2 = w \cdot k^{-1} \cdot L \cdot I(t)$, in the electrolyte phase of the anode in dependence on the mean conductivity k of the electrolyte phase, the charge or discharge current I(t) of the cell in dependence on the time t, a weighting w, and also the thickness L of the anode-separator-cathode sandwich and the potential drop $\Phi_{SEI}$ due to the film resistance at the surface of the anode.

**2.** Method according to Claim 1, **characterized in that** the mean conductivity k of the electrolyte phase is estimated on the basis of the charge or discharge current of the cell I(t) and the terminal voltage.

**3.** Method according to Claim 1, **characterized in that** the mean conductivity k of the electrolyte phase is estimated on the basis of a mean value of the charge or discharge current of the cell I(t).

**4.** Method according to one of the preceding claims, **characterized in that** the measured variables comprise a cell temperature, a cell voltage and a charge or discharge current of the cell.

**5.** Method according to one of the preceding claims, **characterized in that**, in the calculation of the Butler-Volmer reaction kinetics, the anode and the cathode are respectively simplified as a spherical particle whose surface is scaled to the surface of the anode or the cathode of a real secondary intercalation cell, within which in each case the physical-chemical properties are considered to be homogeneously distributed.

**6.** Method according to Claim 5, **characterized in that** the physical-chemical properties in the anode and in the cathode are calculated on the basis of the respectively last-calculated physical-chemical properties in the anode and in the cathode and on the basis of the physical-chemical properties on the surface of the active material 02, 04 (Figure 01) of the anode and the cathode.

7. Method according to one of the preceding claims, **characterized in that** the physical-chemical properties that are respectively considered to be homogeneously distributed in the anode and in the cathode comprise at least the concentration of the atoms and/or molecules and/or ions intercalated during the intercalation respectively in the anode and in the cathode.

8. Method according to one of the preceding claims, **characterized in that** the secondary intercalation cell is a lithium-ion intercalation cell.

## Revendications

1. Procédé de détermination de l'état de charge d'une cellule intercalaire secondaire comprenant une anode, une cathode, un séparateur et une phase électrolytique imprégnant l'anode, la cathode et le séparateur,

dans lequel l'état de charge est calculé rétroactivement sur la base des grandeurs de mesure mesurées sur la cellule intercalaire au moyen d'un modèle de simulation électrochimique,

modèle de simulation dans lequel des propriétés physico-chimiques dans l'anode et la cathode sont considérées de manière simplifiée comme étant réparties de manière homogène dans l'anode et dans la cathode,

et modèle de simulation dans lequel une cinétique de réaction de Butler-Volmer est respectivement calculée pour l'anode et la cathode, dans lequel la cinétique de réaction de Butler-Volmer côté anode est enrichie d'une partie de potentiel ($\Phi_2$) phase électrolytique de l'anode,

**caractérisé en ce qu'**une surtension $\eta_{s,a}$ de la cinétique de réaction de Butler-Volmer enrichie de la partie de potentiel ($\Phi_2$) phase électrolytique de l'anode est calculée pour l'anode conformément à $\eta_{s,a} = \Phi_{s,a} - U_a(c_{s,a}) - \Phi_2(k,I,L) - \Phi_{SEI}$,

où $\Phi_{s,a}$ est la chute de tension dans la phase fixe pour un courant de charge ou de décharge I de la cellule, $U_a(c_{s,a})$ est la tension au repos de l'anode en fonction de la concentration $c_{s,a}$ des atomes et/ou des molécules et/ou des ions stockés dans l'anode lors de l'intercalation,

$\Phi_2(k,I,L)$ est la partie de potentiel calculée dans la phase électrolytique de l'anode conformément à $\Phi_2 = w \cdot k^{-1} \cdot L \cdot I(t)$, dans la phase électrolytique de l'anode en fonction de la conductivité moyenne k de la phase électrolytique, du courant de charge ou de décharge I(t) de la cellule en fonction du temps t, d'une pondération w et de l'épaisseur L du sandwich anode-séparateur-cathode et de la chute de potentiel $\Phi_{SEI}$ à travers la résistance électrique de surface sur la surface de l'anode.

2. Procédé selon la revendication 1, **caractérisé en ce que** la conductivité moyenne k de la phase électrolytique est estimée sur la base du courant de charge ou de décharge I(t) de la cellule et de la tension entre les bornes.

3. Procédé selon la revendication 1, **caractérisé en ce que** la conductivité moyenne k de la phase électrolytique est estimée sur la base d'une valeur moyenne du courant de charge ou de décharge I(t) de la cellule.

4. Procédé selon l'une quelconque des revendications précédentes, **caractérisé en ce que** les grandeurs de mesure comprennent une température de la cellule, une tension de la cellule et un courant de charge ou de décharge de la cellule.

5. Procédé selon l'une quelconque des revendications précédentes,
**caractérisé en ce que** l'anode et la cathode, lors du calcul de la cinétique de réaction de Butler-Volmer, sont respectivement simplifiées comme étant une particule sphérique dont la surface est mise à l'échelle de la surface de l'anode ou de la cathode d'une cellule intercalaire secondaire réelle, à \ l'intérieur de laquelle les propriétés physico-chimiques respectives sont considérées comme étant réparties de manière homogène.

6. Procédé selon la revendication 5, **caractérisé en ce que** les propriétés physico-chimique dans l'anode et dans la cathode sont calculées sur la base des dernières propriétés physico-chimiques respectivement calculées dans l'anode et dans la cathode et sur la base des propriétés physico-chimiques sur la surface du matériau actif 02, 04 (figure 01) de l'anode et de la cathode.

7. Procédé selon l'une quelconque des revendications précédentes,
**caractérisé en ce que** les propriétés physico-chimiques respectivement considérées comme étant réparties de manière homogène dans l'anode et dans la cathode comprennent au moins la concentration des atomes et/ou des molécules et/ou des ions stockés lors de l'intercalation dans l'anode et dans la cathode.

8. Procédé selon l'une quelconque des revendications précédentes,
**caractérisé en ce que** la cellule intercalaire secondaire est une cellule intercalaire au lithium-ion.

# Fig. 1

$U_{Zelle}$

08

12

07

11

Li$^+$

05

03

01

04a

04

10

06

02

02a

09

z

(Stand der Technik)

# Fig. 2

20

$I(t)$

$U(t), T(t)$

$U_m(t), T_m(t)$

+

−

24

21

$e(t)$

22

23

# Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19831723 A1
- DE 19913627 A1
- DE 10139049 A1
- DE 10301823 A1

**In der Beschreibung aufgeführte Nicht-Patentliteratur**

- **DURCH M. DOYLE ; T. FULLER ; J. NEWMAN.** Modeling of galvanostatic Charge and discharge of the lithium/polymer/insertion cell. *Journal of the Electrochemical Society,* 1993, vol. 140, 1526-1533
- **T. FULLER ; M. DOYLE ; J. NEWMAN.** Simulation and optimization of the dual lithium ion insertion cell. *Journal of the Electrochemical Society,* 1994, vol. 141, 1-10
- **J. NEWMAN.** *Fortran programs for the simulation of electrochemical systems,* 1998, http://www.cchem.berkeley.edu/_jsngrp/fortran.html
- **S. SANTHANAGOPALAN ; R. E. WHITE.** Online estimation of the state of charge of a lithium ion cell. *Journal of Power Sources,* 2006, vol. 161, 1346-1355
- **M. DOYLE ; T. FULLER ; J. NEWMAN.** Modeling of galvanostatic charge and discharge of the lithium/polymer/insertion cell. *Journal of the Electrochemical Society,* 1993, vol. 140, 1526-1533
- **V. SUBRAMANIAN ; V. DIWAKAR ; D. TAPRIYAL.** Efficient macro-micro scale coupled modeling of batteries. *Journal of The Electrochemical Society,* 2005, vol. 152, A2002-A2008